# EUROPÄISCHE PATENTSCHRIFT

(11) **EP 3 841 438 B1**
(45) Veröffentlichungstag und Bekanntmachung des Hinweises auf die Patenterteilung: **15.02.2023**
(21) Anmeldenummer: 19732604.4
(22) Anmeldetag: 19.06.2019
(51) Int. Cl.: G05B 19/042, G05B 9/02

(54) **AUTOMATISIERUNGSSYSTEM ZUR ÜBERWACHUNG EINES SICHERHEITSKRITISCHEN PROZESSES**
AUTOMATION SYSTEM FOR MONITORING A SAFETY-CRITICAL PROCESS
SYSTÈME D'AUTOMATISATION DE LA SURVEILLANCE D'UN PROCESSUS CRITIQUE EN MATIÈRE DE SÉCURITÉ

(30) Priorität: 21.08.2018 DE 102018120347
(43) Veröffentlichungstag der Anmeldung: 30.06.2021
(73) Patentinhaber: Pilz GmbH & Co. KG, 73760 Ostfildern (DE)
(72) Erfinder: SCHWEIKER, Matthias, 73760 Ostfildern (DE); BAKOVIC, Daniel, 73760 Ostfildern (DE); SCHOCH, Uwe, 73760 Ostfildern (DE)
(74) Vertreter: Witte, Weller & Partner Patentanwälte mbB
(86) Internationale Anmeldenummer: PCT/EP2019/066170
(87) Internationale Veröffentlichungsnummer: WO 2020/038626

(56) Entgegenhaltungen:
- EP-A2- 1 043 641
- DE-A1- 10 158 317
- Martin Süßkraut ET AL: "Sichere Programmausführung mit Diversified Encoding", , 29. April 2017 (2017-04-29), XP055620619, Gefunden im Internet: URL:https://www.silistra-systems.com/image s/PDF/2015-07_Sichere-Programmausfuehrung- mit-Diversified-Encoding_DT.pdf [gefunden am 2019-09-10]
- "Functional safety of electrical/electronic/programmable electronic safety-related systems - Part 7: Overview of techniques and measures (see <a href="http://www.iec.ch/functionalsafety"> Functional Safety and IEC 61508</a>)", IEC 61508-7:2010, IEC, 3, RUE DE VAREMBÉ, PO BOX 131, CH-1211 GENEVA 20, SWITZERLAND, 30. April 2010 (2010-04-30), Seiten 1-296, XP082003393, [gefunden am 2010-04-30]

## Beschreibung

Die vorliegende Erfindung betrifft ein Automatisierungssystem zur Überwachung eines sicherheitskritischen Prozesses, ein entsprechendes Verfahren sowie eine sichere Laufzeitumgebung zur Bereitstellung von sicheren Resources auf einer Plattform.

Automatisierungssysteme zur Überwachung eines sicherheitskritischen Prozesses werden dazu verwendet, ein Risiko, welches von technischen Anlagen für Menschen und Umwelt ausgeht, zu reduzieren. Hierzu werden Sicherheitsfunktionen implementiert, die bei Gefahr die technische Anlage oder den sicherheitskritischen Prozess in einem sicheren Zustand überführen. Unter dem Begriff der Sicherheitsfunktion versteht man nach DIN EN ISO 13849-1 und DIN EN ISO 12100 eine sicherheitsgerichtete Steuerungsfunktion einer Maschine, die ein von der Maschine ausgehendes Risiko auf ein akzeptables Maß reduziert. Eine Sicherheitsfunktion ist beispielsweise die Abschaltung einer Maschine nach Drücken eines Not-Austasters.

Ursprünglich wurden Sicherheitsfunktionen zunächst durch einzelne sichere Baugruppen beispielsweise in Form von Sicherheitsschaltgeräten mit Relaistechnik realisiert, die unabhängig von einer Steuerung der zu überwachenden Anlage agierten. In der Weiterentwicklung wurden Sicherheitsschaltgeräte anschließend logisch miteinander verknüpft, um auch komplexere Sicherheitsfunktionen zu realisieren.

Für noch komplexere Aufgabe werden heutzutage Sicherheitssteuerungen eingesetzt. Sicherheitssteuerungen entstanden vor allem aus dem Wunsch heraus, Sicherheit ähnlich wie bei einer speicherprogrammierbaren Steuerung (SPS-Steuerung) per Programmierung verschalten zu können. In ihrer eigentlichen Funktion unterscheiden sich Sicherheitssteuerungen daher nur unwesentlich von SPS-Steuerungen. Im Kern entspricht eine Sicherheitssteuerung zwei einzelne SPS-Steuerungen, die ein Anwenderprogramm parallel abarbeiten, dasselbe Prozessbild der Ein-/Ausgänge nutzen und sich ständig abgleichen.

Intern unterscheidet sich der Aufbau einer Sicherheitssteuerung jedoch erheblich von einer SPS-Steuerung, um die sicherheitstechnischen Besonderheiten zu implementieren. Eine Sicherheitsteuerung unterscheidet sich von einer SPS-Steuerung daher regelmäßig durch zwei getrennte Kanäle, einen diversitären Aufbau mit unterschiedlicher Hardware, ständigen Tests der Ein- und Ausgänge, ständigen Vergleich der Anwenderdaten, einer Spannungs- und Zeitüberwachung sowie einer sicheren Abschaltung im Fehler-/ Gefahrenfall. Zudem müssen die an den Sicherheitsfunktionen beteiligten Komponenten - insbesondere die CPUs (Central Processing Unit) - fehlersicher sein. Zur Realisierung normgerechter Sicherheit, insbesondere um ein Safety Integrity Level (SIL 3) nach IEC 61508 zu erreichen, wurden daher ursprünglich CPUs redundante verwendet, d.h. mindestens zwei CPUs, die sich gegenseitig überwachen.

Aus EP 1 043 641 A2 ist ein fehlersicheres Automatisierungssystem bekannt, welches auf einer Standard-CPU aufbaut. Die Fehlerbeherrschungsmaßnahmen sind dabei weitestgehend in das Anwenderprogramm integriert und umfassen: Sicherheitsprotokolle, zeitliche Programmlaufkontrolle, logische Programmlauf- und Datenflusskontrolle, Datensicherung durch Informationsredundanz, diversitäre Verarbeitung sowie Selbsttests innerhalb der Prozessfehlertoleranzzeit. Befehle, die nicht diversitär realisiert werden können, werden innerhalb der Prozessfehlertoleranzzeit getestet. Außerdem werden zur Erkennung von Mehrfachfehlern innerhalb der Mehrfehlereintrittszeit Hintergrundtests durch das Betriebssystem der CPU durchgeführt.

Nachteilig bei dem Sicherheitskonzept gemäß EP 1 043 641 A2 ist, dass die genannten Fehlerbeherrschungsmaßnahmen prozessorabhängig sind und daher für SIL 3 nach IEC 61508 ein Nachweis über die Fehlersicherheit des Prozessors erbracht werden muss. Für komplexe Prozessoren ist ein Diagnosedeckungsgrad (DC: Diagnostic Coverage) von mindestens 99% auf Basis einer Failure-Mode-Effect-Analysis (FMEA) des Prozessors jedoch nicht mehr praktikabel durchführbar. Bei dem in EP 1 043 641 A2 verwendeten Prozessor handelt es sich hingegen um einen speziellen ASIC von geringer Komplexität, der den bereitgestellten Code direkt abarbeitet. Der Nachweis der Fehlersicherheit kann hier noch mit vertretbarem Aufwand geführt werden. Bei der Verwendung von anderen Standard-CPUs kann der entsprechende Code jedoch nicht direkt ausgeführt werden, so dass der Compiler zur Umsetzung des entsprechenden Codes auf dem Maschinencode ebenfalls analysiert werden muss. Ferner sind zur Erkennung von Mehrfachfehlern hardwarenahe Hintergrundtests erforderlich, die bei Standard-CPUs nicht oder nicht mit ausreichender Wirksamkeit implementiert sind und folglich bei der Verwendung einer Standard-CPU extra implementiert werden müssen.

Einen prozessor-unabhängigen Ansatz verfolgt das sogenannte Software Coded Processing (SCP). Ein um SCP erweitertes System ist in der Lage, während der Laufzeit transiente, permanente und systematische Ausführungsfehler zu offenbaren. Zusätzlich kann eine Interferenz zwischen verschiedenen Programmen (funktionale Programme, Middleware, Betriebssystem) erkannt und angezeigt werden. Die bekannteste Variante von SCP ist die sogenannte AN-Codierung, d.h. eine arithmetische Codierung, bei der jeder Wert eines Programms mit einer Konstanten A, insbesondere einer Primzahl, multipliziert wird. Alle Werte und Zustände in dem System, die nicht ein Vielfaches von A sind, werden anschließend als invalide Zustände betrachtet.

Forin, P.: "Vital coded microprocessor principles and application for various transit systems" in Perrin, J. P.: Control, Computers, Communications in Transportation. Selected Papers from the IFAC/IFIP/IFORS Symposium, Pergamon, Oxford, UK, 1990, p. 79-84 beschreibt einen ersten Ansatz für ein fehlersicheres System basierend auf Coded Processing. Das beschriebene System umfasst eine fehlersichere Eingangsbaugruppe, die die Eingangssignale codiert sowie eine Standard-CPU (coded monoprocessor), die aus den codierten Eingangssignalen durch codierte Operationen codiert Zustands- und Ausgangssignale berechnet und eine Signatur über diese erstellt. Ein fehlersicherer Dynamic Controller überprüft die von der der Standard-CPU berechneten Signaturen und schaltet im Fehlerfall eine sichere Ausgangsbaugruppe ab. Das Verfahren kombiniert somit arithmetische Codierung (Multiplikation mit Primzahl A) und ein Signaturverfahren (statische Signatur, dynamische Signatur) und ermöglicht insgesamt eine rechnerische Bestimmung eines Diagnosedeckungsgrades ohne eine aufwendige FMEA der CPU durchführen zu müssen.

Süßkraut, Martin und Kaienburg, Jörg: "Safety critical smart systems with software-coded processing" offenbart weiterführend eine praktische Implementierung eines fehlersicheren Systems basierend auf SCP. Die Implementierung basiert auf zwei verschiedenen (diversitären) Ausführungen (nativ und codiert) der gleichen Sicherheitsfunktion und unterstützt aufgrund seiner speziellen Konstruktion Industriestandards wie die IEC 61508. Die native Ausführung entspricht der Ausführung des ursprünglichen Quellcodes der Sicherheitsfunktion (natives Programm) und verarbeitet die nativen Eingabewerte und Zustände. Hierbei werden somit nur die nativen Zustände verarbeitet und das Ergebnis der nativen Ausführung sind die nativen Ausgaben. Bei der codierten Ausführung wird eine codierte Form der ursprünglichen Sicherheitsfunktion ausgeführt (codiertes Programm). Dieses setzt voraus, dass der ursprüngliche Quellcode der Sicherheitsfunktion vorab transformiert und codiert wurde. Das codierte Programm arbeitet dann mit codierten Eingangswerten, codierten Zuständen und erzeugt eine codierte Ausgabe. Das native und das codierte Programm arbeiten beide mit den gleichen Ausgangswerten, wobei die codierten Eingabewerte die codierte Variante der nativen Eingabewerte ist. Gleiches gilt für die Zustands- und Ausgangswerte. Das native und das codierte Programm werden von einem sogenannten Diversity-Framework ausgeführt und verwaltet. Das Diversity-Framework wird aus dem Quellcode der ursprünglichen Sicherheitsfunktion generiert, indem der Quellcode mit entsprechenden Annotationen angereichert wird. Das Diversity-Framework koordiniert die parallele Ausführung der beiden Programme (nativ und codiert) und überprüft die fehlerfreie Ausführung anhand von Prüfsummen, die es über die nativen und codierten Ausgangswerte bildet. Ferner kann das Diversity-Framework den Kontrollfluss der Sicherheitsfunktion überwachen, indem das Diversity-Framework den Datenfluss der Kontrollflussprüfung so integriert, dass jeder Kontrollflussfehler die Ausgangsprüfsumme verändert.

Nachteilig bei den vorgenannten auf SCP-basierenden Verfahren ist jedoch, dass die codierten Operationen sehr viel Laufzeit kosten und die Codegenerierung aufwendig und komplex ist, insbesondere wenn zusätzlich noch Signaturverfahren eingesetzt werden. So benötigt beispielsweise das codierte Programm bei SPC mehr Bits für die Speicherung und Verarbeitung von Werten als die native Variante. Wenn beispielsweise das native Programm 32-Bit Datentypen verwendet, muss das codierte Programm mindestens Datentypen verwenden, die das A-fache eines größtmöglichen Werts eines 32-Bit Datentypen speichern können. Implementiert wird daher das codierte Programm in der Regel mit 64-Bit Datentypen, wenn das native Programm 32-Bit Datentypen verwendet. Ebenso sind alle nativen Operationen durch entsprechende codierte Operationen zu ersetzen, deren Ausführung mehr Laufzeit als die nativen Operationen kostet und eine entsprechend komplexe Tool-Chain zu dessen Erstellung erfordert.

Vor diesem Hintergrund ist es eine Aufgabe der vorliegenden Erfindung ein sicheres Automatisierungssystem anzugeben, das die vorstehenden Nachteile vermeidet, auf Standardkomponenten aufbaut und gleichzeitig die Implementierung einer normgerechten Sicherheitsfunktion einer hohen Sicherheitskategorie ermöglicht. Ferner sollte das Automatisierungssystem weniger komplex sein, und sich flexibel einsetzen lassen.

Gemäß einem Aspekt der vorliegenden Erfindung wird diese Aufgabe durch ein Automatisierungssystem zur Überwachung eines sicherheitskritischen Prozesses gelöst, umfassend: eine Plattform zum Ausführen von Anwenderprogrammen, eine fehlersichere Peripheriebaugruppe, über welche der sicherheitskritische Prozess mit den Anwenderprogrammen koppelbar ist, ein erstes Anwenderprogramm und eines zum ersten Anwenderprogramm diversitäres zweites Anwenderprogramm, die zusammen eine Sicherheitsfunktion realisieren, sowie eine sichere Laufzeitumgebung, welche unabhängig von den Anwenderprogrammen auf der Plattform implementiert ist, und dazu eingerichtet ist, den Anwenderprogrammen von der Plattform unabhängige sichere Ressourcen bereitzustellen.

Gemäß einem weiteren Aspekt der vorliegenden Erfindung wird diese Aufgabe ferner durch ein entsprechendes Verfahren zur Überwachung eines sicherheitskritischen Prozesses gelöst, mit den Schritten:
- Bereitstellen einer Plattform zum Ausführen von Anwenderprogrammen;
- Koppeln der Anwenderprogramme mit dem sicherheitskritischen Prozess über eine fehlersichere Peripheriebaugruppe;
- Realisieren einer Sicherheitsfunktion durch ein erstes Anwenderprogramm und ein zum ersten Anwenderprogramm diversitäres zweites Anwenderprogramm;
- Bereitstellen sicherer Ressourcen, die von der Plattform unabhängig sind und durch eine sichere Laufzeitumgebung bereitgestellt werden, welche unabhängig von den Anwenderprogrammen auf der Plattform implementiert ist; und
- Ausführen des ersten und des zweiten Anwenderprogramms auf der Plattform unter Nutzung der sicheren Ressourcen.

Es ist somit eine Idee der vorliegenden Erfindung, die sicherheitskritischen Besonderheiten eines sicheren Automatisierungssystems in einer sicheren Laufzeitumgebung zu kapseln. Die sichere Laufzeitumgebung bildet eine Softwareschicht zwischen der ausführenden Plattform und den Anwenderprogrammen, welche die Sicherheitsfunktion implementieren. Die Sicherheitsfunktion wird dabei von zwei Applikationen doppelt und diversitär ausgeführt und von der sicheren Laufzeitumgebung überwacht. Die sichere Laufzeitumgebung ist wiederum unabhängig von den Anwendungen überwachbar, beispielsweise durch eine externe sichere Einrichtung. Die sicherheitskritischen Besonderheiten werden somit aus den Anwenderprogrammen heraus in eine allgemein gültige sichere Laufzeitumgebung verlagert.

Die Plattform kann eine Software-, Hardware- oder virtuelle Plattform sein, die als Basis für die Entwicklung und Ausführung darauf aufsetzender Anwenderprogramme dient. Insbesondere kann die Plattform eine nichtsichere Plattform sein, beispielsweise ein einkanaliges System wie ein handelsüblicher PC. Alternativ kann die Plattform auch in Form von Cloud-Computing bereitgestellt werden, insbesondere als *Infrastructure as a Service (laaS) oder Plattform as a Service (PaaS).* Letzteres kann in einer bevorzugten Ausgestaltung bereits die sichere Laufzeitumgebung umfassen. Nichtsicher bedeutet in diesem Zusammenhang, dass die nichtsichere Plattform für sich nicht den einschlägigen sicherheitstechnischen Anforderungen genügt, um alleinstehend eine Sicherheitsfunktion mit dem geforderten Maß an Eigenfehlersicherheit auszuführen.

Die erfindungsgemäße Implementierung ermöglicht nunmehr, dass eine Plattform nicht fehlersicher ausgestaltet sein muss, um einen hohen Diagnosedeckungsgrad des Automatisierungssystems insgesamt zu erreichen. Hierzu trägt im Wesentlichen die sichere Laufzeitumgebung bei. Diese lädt die von den Anwendungsprogrammierern entwickelten Programme und lässt diese auf der Plattform ablaufen. Die sichere Laufzeitumgebung ist für die jeweilige Plattform implementiert und stellt somit selbst eine kleine Plattform dar, auf der die Programme aufsetzen können. Die sichere Laufzeitumgebung ist allgemein gültig und unabhängig von den Anwenderprogrammen implementiert und kann folglich auch von den Anwenderprogrammen unabhängig auf verschiedene Plattformen portiert werden.

Durch die Verwendung der sicheren Laufzeitumgebung ist es für einen hohen Diagnosedeckungsgrad ausreichend, wenn die Sicherheitsfunktion durch zwei parallel laufende Anwenderprogramme realisiert wird, die diversitär sind. Diversitär bedeutet in diesem Zusammenhang, dass das erste und das zweite Anwenderprogramm unterschiedliche Berechnungsmethoden verwenden, um dasselbe Ergebnis zu ermitteln. Durch den Vergleich der Ergebnisse beider Anwenderprogramme können insbesondere Fehler mit gemeinsamer Ursache erkannt werden.

Im Gegensatz zu einer codierten Programmversion im Sinne von SCP, ist eine diversitäre Programmversion jedoch einfacher und mit geringem Aufwand aus dem ursprünglichen Programm zu erstellen, da insbesondere keine codierten Operationen verwendet werden, sondern regelmäßig nur Gegenstücke bestehender Operationen zum Einsatz kommen. Die diversitäre Verarbeitung hat im Gegensatz zu einer codierten Verarbeitung keine zusätzliche Redundanz, wodurch das diversitäre Programm nicht wesentlich komplexer ist als das ursprüngliche Programm und so auch nicht mehr Laufzeit kostet. Gleichzeitig kann eine Tool-Chain zur Erstellung eines diversitären Programms einfacher ausgebildet sein als ein Tool-Chain zur Erstellung einer codierten Programmversion im Sinne von SCP.

Das erste Anwenderprogramm kann einkanalig in einer Hochsprache, wie beispielsweise C, geschrieben werden, wobei die diversitäre Programmversion automatisch erzeugt wird. Der Anwendungsentwickler kann sich ausschließlich auf die Implementierung der Sicherheitsfunktion konzentrieren, ohne die Details der sicheren Ausführung zu berücksichtigen. Insbesondere kann der Entwickler auf zusätzliche Annotationen im nativen Programm verzichten, da für die Ausführung kein zusätzlicher Ausführungsrahmen (diversity framework) erzeugt werden muss, da die Ausführung von der sicheren Laufzeitumgebung einheitlich koordiniert wird.

Die sichere Laufzeitumgebung lädt das erste Anwenderprogramm und das zweite aus dem ersten generierte Anwenderprogramm, führt diese aus und koordiniert deren Zusammenspiel. Die sichere Laufzeitumgebung stellt hierfür, vorzugsweise doppelt und diversitär, sichere Ressourcen bereit, wie beispielsweise die Prozessdaten für jeden Kanal, Timer oder grundlegende Funktionen wie eine sichere Prüfsummenberechnung. Neben sicheren Funktionsbausteinen für die Anwenderprogramme umfassen die sicheren Ressourcen auch Laufzeit-Bibliotheken, welche insbesondere die Testfunktionen und Absicherungen der Anwenderprogramme zur Laufzeit übernehmen. Zu diesen Laufzeit-Bibliotheken zählen somit auch Dienste, die eine Koordinierung mit einem externen Sicherheitsgeber unabhängig von den Anwenderprogrammen ermöglichen.

Ein Kern der Erfindung liegt somit u.a. darin, das Automatisierungssystem insgesamt sicher zu machen, ohne dabei den Fokus auf die Fehlersicherheit der einzelnen Bestandteile zu legen. Vielmehr wird bei dem erfindungsgemäßen Vorgehen jede Komponente des sicheren Automatisierungssystems nur so sicher gestaltet, dass im Zusammenspiel mit den anderen Komponenten das Automatisierungssystem eine höchstmögliche Sicherheitsstufe gewährleistet kann. Auf diese Weise kann auf allen Ebenen des Automatisierungssystems eine ausreichende Balance zwischen Sicherheit und Implementierungsaufwand erreicht werden.

In einer bevorzugten Ausgestaltung ist die Plattform eine nichtsichere Plattform. In dieser Ausgestaltung sind zumindest einige Komponenten der Plattform Standardbaugruppen, die nicht die für Sicherheitsanwendungen nötige Eigenfehlersicherheit aufweisen. Standardkomponenten sind jedoch günstiger und können in der Regel mehr Rechenleistung bereitstellen als vergleichbare sichere Komponenten. Das Automatisierungssystem kann so besonders günstig realisiert werden.

In einer weiteren Ausgestaltung verarbeitet das zweite Anwenderprogramm zum ersten Anwenderprogramm inverse Daten. Auf diese Weise kann besonders einfach eine diversitäre Verarbeitung erreicht werden. Indem das zweite Anwenderprogramm mit inversen Daten arbeitet, muss das Anwenderprogramm entsprechend angepasste Operationen ausführen. Diese Operationen können jedoch in der Regel durch komplementäre Gegenstücke gängiger Operationen realisiert werden, wodurch sich die Komplexität des zweiten Anwenderprogramms gegenüber dem ersten Anwenderprogramm nicht wesentlich erhöht.

In einer weiteren Ausgestaltung stellt die sichere Laufzeitumgebung die sicheren Ressourcen redundant und diversitär für das erste und das zweite Anwenderprogramm bereit. Auf diese Weise kann die Sicherheit weiter erhöht werden, ohne dass die Anwenderprogramme komplexer ausgestaltet werden. Die Bereitstellung von redundanten und diversitären sicheren Ressourcen ist dabei einfacher als dieselben Maßnahmen in den Anwenderprogrammen selbst zu realisieren. Ebenso können die sicheren Ressourcen einfacher wiederverwendet werden.

In einer weiteren Ausgestaltung ist die sichere Laufzeitumgebung dazu ausgebildet, Kreuzvergleiche zwischen dem ersten und dem zweiten Anwenderprogramm auszuführen. In dieser Ausgestaltung sind die für die Sicherheit notwendigen Kreuzvergleich ebenfalls in die sichere Laufzeitumgebung ausgelagert, so dass auch hierdurch die Entwicklung der Anwenderprogramme vereinfacht wird, da der Anwendungsentwickler sich nicht um die Ausgestaltung und Durchführung der Vergleiche kümmern muss.

In einer weiteren Ausgestaltung ist die sichere Laufzeitumgebung dazu ausgebildet, Zeitgeber als sichere Ressource bereitzustellen und Tests zur Überprüfung der Zeitgeber auszuführen. Auch durch diese Maßnahme kann die Entwicklung der Anwenderprogramme vereinfacht werden, da eine sichere Ressource einfach eingebunden werden kann, ohne diese separat überprüfen zu müssen.

In einer weiteren Ausgestaltung ist die sichere Laufzeitumgebung mit einem externen Sicherheitsgeber koppelbar. In dieser Ausgestaltung kann die sichere Laufzeitumgebung von einer externen Sicherheitsstelle überprüft werden. Die sicheren Ressourcen, die von der sicheren Laufzeitumgebung bereitgestellt werden, können so extern überprüft werden, ohne dass die Anwenderprogramme selbst mit der externen Einheit kommunizieren müssen. Auch hierdurch wird die Anwendungsentwicklung weiter vereinfacht, da die entsprechenden Sicherheitsfunktionen in der sicheren Laufzeitumgebung gekapselt sind.

In einer weiteren Ausgestaltung ist die sichere Laufzeitumgebung dazu ausgebildet, Manipulatoren auszuführen, die eingerichtet sind, die Ausführung des ersten oder des zweiten Anwenderprogramms und/oder der sicheren Ressourcen zu manipulieren. Die sichere Laufzeitumgebung kann somit Dienste ausführen, die gezielt Verfälschungen vornehmen, um Fehlerfälle zu simulieren und die Funktionsfähigkeit der Fehlerbeherrschungsmaßnahmen an den realen Stellen zu testen. Auf diese Weise kann eine besonders hohe Sicherheitsstufe des Gesamtsystems realisiert werden.

In einer hierzu bevorzugten Ausgestaltung sind die Manipulatoren von einem externen Sicherheitsgeber auslösbar und vorzugsweise dazu eingerichtet, die sichere Laufzeitumgebung gegen Fehler zu desensibilisieren. Auf diese Weise kann das Systemverhalten an der realen Stelle im Programm getestet werden.

In einer weiteren Ausgestaltung weist die sichere Laufzeitumgebung eine hardware-spezifische Komponente und eine hardware-unabhängige Komponente auf. Diese Ausgestaltung ermöglicht eine besonders effiziente Implementierung der sicheren Laufzeitumgebung sowie eine einfache Portierung der sicheren Laufzeitumgebung auf andere Plattformen. Bei einer Portierung müssen nur die hardware-spezifischen Komponenten ausgetauscht werden, während die hardware-unabhängigen Komponenten beibehalten werden. Dies erhöht nicht nur die Flexibilität der sicheren Laufzeitumgebung, sondern auch die von ihr bereitgestellte Sicherheit, da die Sicherheitskomponenten nicht jedes Mal neu implementiert werden müssen.

In einer weiteren Ausgestaltung ist die hardware-unabhängige Komponente unabhängig von der hardware-spezifischen Komponente mit einem externen Sicherheitsgeber koppelbar. In dieser Ausgestaltung findet eine Kopplung der sicheren Laufzeitumgebung mit einem externen Sicherheitsgeber ausschließlich durch die hardware-unabhängige Komponente statt, so dass die Kopplung unabhängig von der Plattformrealisierung ist. Eine Kopplung mit einem externen Sicherheitsgeber lässt sich so besonders einfach plattformunabhängig realisieren.

Ausführungsbeispiele der Erfindung sind in der Zeichnung dargestellt und werden in der nachfolgenden Beschreibung näher erläutert. Es zeigen:
- Fig. 1: eine schematische Darstellung eines Automatisierungssystems gemäß einer ersten Ausführungsform der vorliegenden Erfindung,
- Fig. 2: eine schematische Darstellung eines Sicherheitsmodells eines Automatisierungssystems nach einer weiteren Ausführungsform der vorliegenden Erfindung,
- Fig. 3: eine schematische Darstellung eines Architekturmodells eines Automatisierungssystems,
- Fig. 4: ein Zustandsdiagramm einer Fehlerroutine eines Automatisierungssystems gemäß einer bevorzugten Ausführungsform der vorliegenden Erfindung,
- Fig. 5: eine schematische Darstellung eines Automatisierungssystems gemäß einer zweiten Ausführungsform der vorliegenden Erfindung,
- Fig. 6: zwei Ausführungsvarianten gemäß der zweiten Ausführungsform der vorliegenden Erfindung, und
- Fig. 7: ein Schaltungsdiagramm eines bevorzugten Ausführungsbeispiels des erfindungsgemäßen Automatisierungssystems gemäß der zweiten Ausführungsform.

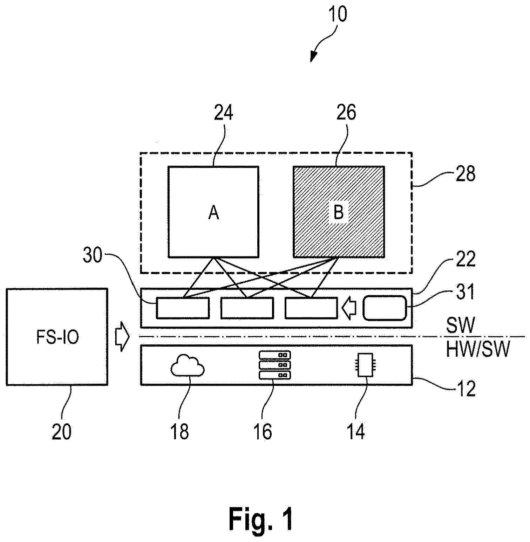

In der Fig. 1 ist eine erste Ausführungsform des neuen Automatisierungssystems in seiner Gesamtheit mit der Bezugsziffer 10 bezeichnet. Das Automatisierungssystem 10 umfasst hier Hard- und Softwarekomponenten, die zusammen ein sicheres Automatisierungssystem bilden. Sicher bedeutet in diesem Zusammenhang, dass ein Safety Integrity Level 3 nach IEC 61508 von dem erfindungsgemäßen Automatisierungssystem für eine implementierte Sicherheitsfunktion erreicht werden kann.

Das Automatisierungssystem umfasst eine Plattform 12, die als Datenverarbeitungseinrichtung und Recheneinheit dient. Bei der Plattform 12 kann es sich um dedizierte Hardware 14, reale oder virtuelle Rechensysteme 16 oder aber über sich in einer Cloud befindliche Infrastruktur 18 handeln. Ebenso kann die Plattform 12 sich aus einer Kombination der vorgenannten Einrichtungen zusammensetzen.

Die Plattform 12 kann eine nichtsichere Plattform sein oder sich zumindest teilweise aus nichtsicheren Komponenten zusammensetzen. Nichtsicher bedeutet hier, dass die Komponenten der Plattform 12 im Sinne der einschlägigen Sicherheitsnorm nicht die ausreichende Eigenfehlersicherheit aufweisen bzw. nachweisen können, um alleinstehend ein sicheres System realisieren zu können. Die Plattform 12 kann sich somit beispielsweise aus handelsüblicher PC-Hardware zusammensetzen und insbesondere Standardprozessoren umfassen. Ebenso kann in einem anderen Ausführungsbeispiel die Plattform bzw. Komponenten der Plattform auch in Form von Cloud-Computing bereitgestellt werden.

Die Plattform 12 kann sich aus Hard- und Software-Komponenten zusammensetzen. Beispielsweise kann die Plattform 12 ein nichtsicheres Gerät, wie beispielsweise ein PC oder ein RaspberryPi sein, auf dem ein nicht sicheres Echtzeitbetriebssystem (RTOS), bspw. ein Linux-Derivat, läuft.

Das Automatisierungssystem 10 umfasst ferner wenigstens eine fehlersichere Peripheriebaugruppe 20 zur fehlersicheren Eingabe vom Prozess und fehlersicheren Ausgabe an dem Prozess. Die fehlersichere Peripheriebaugruppe 20 ermöglicht die Verbindung des Automatisierungssystems mit dem Prozess. Die Fehlersicherheit der Peripheriebaugruppe 20 sowie eine sicherheitsgerichtete Kommunikation zwischen der Peripheriebaugruppe 20 und dem Automatisierungssystem 10 wird dabei durch aus der Sicherheitstechnik bekannte Prinzipien erreicht und ist nicht Gegenstand dieser Offenbarung.

Die Plattform 12 und die fehlersichere Peripheriebaugruppe 20 bilden zusammen den Unterbau und die Schnittstellen des sicheren Automatisierungssystems 10, während eine auf der Plattform aufsitzende sichere Laufzeitumgebung 22 sowie Anwenderprogramme 24, 26 die eigentliche Sicherheitsfunktion 28 realisieren.

Die sichere Laufzeitumgebung 22 ist eine Softwareschicht, die zwischen der Plattform 12 und den Anwenderprogrammen 24, 26 angeordnet ist und den Anwenderprogrammen 24, 26 von der Plattform 12 unabhängige sichere Ressourcen 30 bereitstellt. Die sichere Laufzeitumgebung 22 lädt die Anwenderprogramme 24, 26, führt diese auf der Plattform aus und koordiniert deren gegenseitigen Verknüpfungen. Die sichere Laufzeitumgebung 22 stellt somit selbst eine kleine Plattform dar, mit deren Hilfe die Anwenderprogramme 24, 26 ausgeführt werden.

Vorzugsweise sind die Anwenderprogramme 24, 26 für die Plattform 12 spezifisch ausgebildet, d.h. in einer Programmiersprache geschrieben, die in nativen Maschinencode der Plattform 12 zur Ausführung umgesetzt werden kann. Die sichere Laufzeitumgebung 22 ist somit kein "Betriebssystem" für die Ausführung der Anwenderprogramme 24, 26, sondern kapselt lediglich sichere Ressourcen 30 für die Anwenderprogramme 24, 26, so dass diese von den Anwenderprogrammen 24, 26 eingebunden werden können, ohne dass die Anwenderprogramme 24, 26 eine sichere Ausführung der sicheren Ressourcen 30 gewährleisten müssen. Die sichere Laufzeitumgebung 22 kann wiederum in plattformspezifische Komponenten und plattform-unabhängige Komponenten unterteilt sein, wobei insbesondere die sicheren Ressourcen 30 durch plattform-unabhängige Komponenten realisiert werden, so dass die sicher Laufzeitumgebung 22 einfach auf verschiedene Plattformen portiert werden kann.

Die Sicherheitsfunktion 28 kann eine beliebige Sicherheitsfunktion, wie beispielsweise Notaus-, Zweihand- oder dezentrale E/A sein. Die Sicherheitsfunktion 28 ist somit eine durch das Automatisierungssystem realisierte sicherheitsgerichtete Steuerfunktion. Die sicherheitsgerichtete Steuerfunktion wird erfindungsgemäß durch zwei Anwenderprogramme 24, 26 realisiert, die parallel ausgeführt werden. Zusätzlich zur redundanten Ausführung sind die Anwenderprogramme diversitär zueinander, d.h. ein und dasselbe Ergebnis wird durch die Anwenderprogramme 24, 26 auf unterschiedliche Weise erreicht.

Eine Berechnung gilt als vollständig diversitär, wenn die gegenseitige Rückwirkungsfreiheit der Teile eines Prozessors, die für die Berechnung herangezogen werden, bzw. die gegenseitige Rückwirkungsfreiheit der verschiedenartigen Verwendungen derselben Teile eines Prozessors verifiziert sind. Zu einem solchen Nachweis sind üblicherweise Hardware-Tests notwendig, die bei einer codierten Verarbeitung im Sinne von SCP entfallen können und auch bei dem erfindungsgemäßen Automatisierungssystem entfallen dürfen, wenn diese Hardwaretests durch zusätzliche Tests und die sicheren Ressourcen 30 der sicheren Laufzeitumgebung kompensiert und von extern überprüfbar gemacht werden können.

In einem bevorzugten Ausführungsbeispiel wird die Diversität zwischen dem ersten und dem zweiten Anwenderprogramm 24, 26 dadurch erreicht, dass das zweite Anwenderprogramm 26 mit diversen Daten zum ersten Anwenderprogramm 24 arbeitet und daraus resultierend unterschiedliche Befehle für gleiche Rechenschritte verwendet. Die Verwendung von inversen Daten stellt keine vollständige Diversität bereit, jedoch eine ausreichende Diversität, um im Zusammenspiel mit der sicheren Laufzeitumgebung 22 und den von der Laufzeitumgebung 22 bereitgestellten Tests 31, eine ausreichende Fehlersicherheit zu ermöglichen.

Eine Programmversion, die mit inversen Daten arbeitet (im Folgenden als inverses Anwenderprogramm bezeichnet) kann leicht automatisiert nach einem festen Schema aus der nativen Programmversion erzeugt werden. Das inverse Anwenderprogramm kann somit mit vergleichbarem Aufwand ausgeführt werden, wie das native Anwenderprogramm. Ebenso kann im Gegensatz zu einem codierten Anwenderprogramm im Sinne von SCP das inverse Anwenderprogramm mit den gleichen Datentypen arbeiten und auf den gleichen Befehlssatz zurückgreifen, da Berechnungen mit inversen Daten auf der gleichen Arithmetik basieren. Ein inverses Anwenderprogramm ist daher weniger komplex als ein codiertes Anwenderprogramm, welches auf arithmetischer Codierung, beispielsweise AN-Codierung, beruht. Zudem kann auch eine Tool-Chain zur Erstellung der inversen Programmversion aus der nativen Programmversion vereinfacht werden. Durch die vereinfachte Tool-Chain ist eine schnelle Portierung auf andere System oder die Verwendung einer anderen Programmiersprache möglich. Insgesamt wird hierdurch die Flexibilität des gesamten Ansatzes erhöht.

Die Erfindung basiert daher u.a. auf der Annahme, dass durch eine codierte Verarbeitung gemäß SCP zwar Ausführungsfehler in einem Anwenderprogramm eindeutiger und zuverlässiger offenbart werden können als bei der hier vorgeschlagenen diversitären Verarbeitung, der Aufwand hierfür jedoch nicht gerechtfertigt ist, da stets die Anwendung in ein Sicherheitsmodell integriert werden muss, um eine hohe Sicherheitseinstufung zu erreichen.

Es ist somit eine Idee, anstelle der Eigenfehlersicherheit einzelner Komponenten, wie bspw. die Eigenfehlersicherheit des Anwenderprogramms durch SCP zu erhöhen, eine Gesamtbetrachtung durchzuführen und die einzelnen Komponenten des Automatisierungssystems nur so sicher wie nötig zu machen, so dass insgesamt ein sicheres Automatisierungssystem entsteht, welches die Sicherheitsfunktion gemäß der höchstmöglichen Sicherheitsstufe der einschlägigen Norm ausführen kann. Ein Fokus der vorliegenden Erfindung liegt daher darauf, die einzelnen Komponenten des Automatisierungssystems, d.h. insbesondere die Anwenderprogramme 24, 26, die sichere Laufzeitumgebung 22 und die Plattform 12, so einfach und flexibel wie möglich zu gestalten, so dass auf allen Ebenen des Automatisierungssystems ein ausgewogener Kompromiss zwischen Sicherheit, Komplexität und Portierbarkeit erreicht wird.

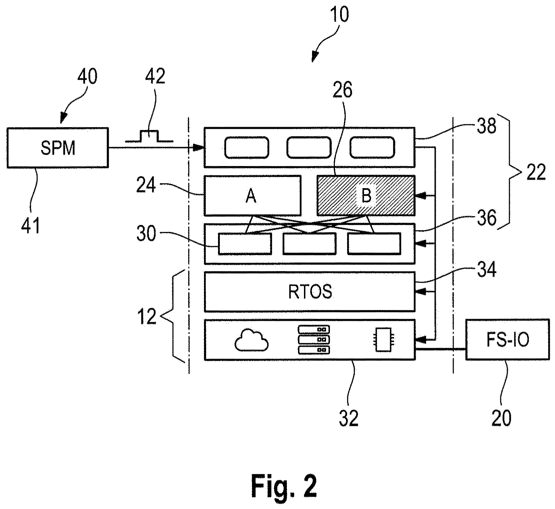

Fig. 2 zeigt in einer schematischen Darstellung ein Sicherheitsmodell eines Automatisierungssystems gemäß einer bevorzugten Ausführungsform der vorliegenden Erfindung.

Die sichere Laufzeitumgebung 22 setzt hier auf einem nichtsicheren Gerät 32 mit einem nichtsicheren Echtzeitbetriebssystem 34 auf. Zusammen bilden das nichtsichere Gerät 32 und das nichtsichere Echtzeitbetriebssystem die Plattform 12. Die sichere Laufzeitumgebung 22 ist eine Softwareschicht, die einerseits in einem Ressourcenlayer 36 sichere und von der Plattform 12 unabhängige Ressourcen 30 für die Anwenderprogramme 24, 26 bereitstellt und andererseits eine lokale Sicherheitsinstanz 38 bildet, um die Anwenderprogramme 24, 26 sowie die von diesen implementierte Sicherheitsfunktion zu überwachen. Die Anwenderprogramme 24, 26 sind dabei über eine sichere Peripheriebaugruppe 20 mit dem zu überwachenden Prozess verbunden.

Die sichere Laufzeitumgebung 22 kann wiederum von einem sicheren Gerät überwacht werden. Das sichere Gerät (im Folgenden auch als Safety-Pacemaker (SPM) 40 bezeichnet) kann ein einfacher Hardware-Dongle, bspw. in Form eines handelsüblichen USB-Sticks, sein mit einem oder mehreren einfachen Mikrocontrollern, wie beispielsweise einen PIC und/oder AVR. Es versteht sich, dass ein Hardware-Dongle hier nicht auf eine USB-Schnittstelle beschränkt ist, sondern der SPM 40 auch über Ethernet, RS232 oder eine andere Kommunikationsschnittstelle verbunden werden kann.

Der SPM 40 realisiert eine zweite, vorzugsweise externe Sicherheitsinstanz 41. Die zweite Sicherheitsinstanz 41 testet die sichere Laufzeitumgebung 22, insbesondere die erste lokale Sicherheitsinstanz 38, durch gezielte Fehlereinstreuung. Die Fehlereinstreuung erfolgt über Dienste und Manipulatoren der sicheren Laufzeitumgebung 22, die von der externe Sicherheitsinstanz 41 aktiviert werden. Auf diese Weise können Datenvergleicher, ein Systemtakt sowie Timertests der sicheren Laufzeitumgebung 22 überprüft und Fehler bei der Ausführung der Anwenderprogramme 24, 26 offenbart werden, ohne dass entsprechende Tests bei der Entwicklung der Anwenderprogramme 24, 26 berücksichtigt und/oder implementiert werden müssen. Das erste Anwenderprogramm 24 kann somit einkanalig geschrieben werden, ohne dass der Anwendungsprogrammierer die Absicherung des Anwenderprogramms berücksichtigen muss. Ein zweites Anwenderprogramm 26, welches diversitär zu dem ersten Anwenderprogramm ist, kann automatisch durch eine Tool-Chain erzeugt werden. Der Anwendungsentwickler kann sich somit ausschließlich um die Implementierung der eigentlichen Sicherheitsfunktion kümmern.

In einem bevorzugten Ausführungsbeispiel kann der SPM 40 zusätzlich einen Sicherheitstakt 42 bereitstellen, insbesondere um an der sicheren Peripheriebaugruppe 20 einen zweiten Abschaltweg zu realisieren.

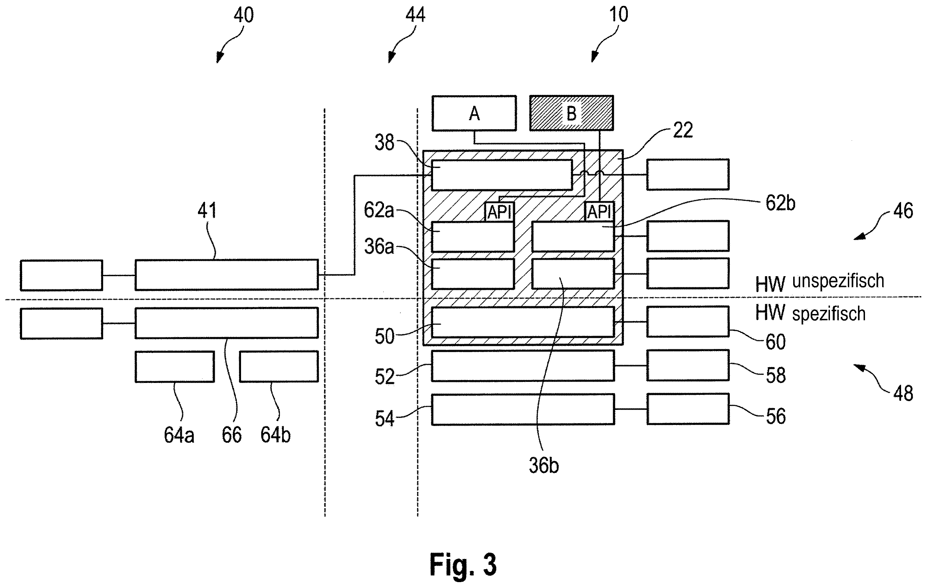

Fig. 3 zeigt ein Architekturmodell, in das ein Ausführungsbeispiel des Automatisierungssystems 10 eingebettet ist.

Das Architekturmodell umfasst im Wesentlichen drei Komponenten. Dies sind das Automatisierungssystem 10, eine externe Sicherheitseinheit, wie beispielsweise der zuvor genannte SPM 40 sowie eine Kommunikationsschnittstelle 44 zwischen diesen beiden Komponenten.

Alle drei Komponenten können eine hardware-neutrale 46 und eine hardware-spezifische Schicht 48 aufweisen. Bei dem Automatisierungssystem 10 entkoppelt die sichere Laufzeitumgebung 22 mit einer hardware-spezifischen Komponente, einer sogenannten System Abstraction Layer (SAL), die hardware-spezifische Schicht 48 von der hardware-neutralen Schicht 46. Die SAL 50 abstrahiert die sichere Laufzeitumgebung 22 von einem Betriebssystem 52 und der zugehörigen Hardware 54. Spezialhardware 56, welche durch Betriebssystemtreiber 58 angesprochen wird, kann durch eigenständige SAL-Treiber 60 abstrahiert werden.

Auf der hardware-neutralen Schicht 46 implementiert das Automatisierungssystem 10 eine Ressourcenlayer 36. Der Ressourcenlayer 36 stellt die sichern Ressourcen zur Verfügung und ist, wie hier dargestellt, vorzugsweise doppelt und diversitär vorhanden. Der Ressourcenlayer 36 kann Timer bereitstellen sowie die Prozessdaten für jeden Kanal. Zudem kann der Ressourcenlayer 36 sicherheitsgerichtete Funktionalitäten bereitstellen, wie beispielsweise eine sichere CRC-Berechnung.

Auf dem Ressourcenlayer 36 sitzt, vorzugsweise für jedes Anwenderprogramm 24, 26 separat, ein Anwendungsmanager 62a, 62b auf. Dieser prüft beim Anlaufen der beiden Anwenderprogramme 24, 26 deren Konsistenz und überprüft deren CRC. Der Anwendungsmanager 62a, 62b ist ferner vorzugweise zuständig für den zyklischen Aufruf der Anwenderprogramme, deren Ablaufüberwachung und für die Bereitstellung einer API. Die API kann Funktionen für das Setzen der Ausgänge, für das Lesen der Eingänge und für das Starten und Lesen der Applikationstimer enthalten. Der Anwendungsmanager 62a, 62b ist, wie hier dargestellt, ebenfalls vorzugsweise doppelt und diversitär ausgebildet.

Die sichere Laufzeitumgebung 22 des Automatisierungssystems 10 implementiert ferner eine lokale Sicherheitsinstanz 38. Die lokale Sicherheitsinstanz 38 nimmt die notwendigen Sicherheitsaufgaben wahr. Dies umfasst RAM- und ROM-Tests, die Zyklus- und Ablaufüberwachung und die Timertests. Ferner übernimmt die lokale Sicherheitsinstanz 38 die Konsistenzprüfung der Prozessdaten der Anwenderprogramme 24, 26. Die lokale Sicherheitsinstanz 38 läuft hierfür vorzugsweise nur einmal auf dem System und ist extern über den SPM 40 überprüfbar.

Der SPM 40 ist ein fehlersicheres Gerät mit einer sicheren Hardware, die beispielsweise aus zwei redundanten Prozessoren 64a, 64b gebildet wird, die in an sich bekannter Weise eine sichere Ausführung einer Anwendung ermöglichen. Da der SPM keine Anwenderprogramme zur Steuerung im Sinne der Anwenderprogramme des Automatisierungssystems 10 ausführt, kann die Hardware besonders einfach ausgebildet sein. Insbesondere können spezielle sichere CPUs für die Prozessoren 64a, 64b verwendet werden, bei denen ein Nachweis über die Fehlersicherheit praktikabel erbracht werden kann, beispielsweise durch FMEA.

Auf dem SPM 40 wird eine zweite Sicherheitsinstanz 41 ausgeführt. Diese ist vorzugsweise hardware-neutral implementiert und durch eine Abstraktionsschicht 66 von der Hardware entkoppelt. Die zweite Sicherheitsinstanz 41 kann mit der ersten Sicherheitsinstanz 38 des Automatisierungssystems 10 über die Kommunikationsschnittstelle 44 kommunizieren.

Die Kommunikationsschnittstelle 44 kann eine einkanalige Kommunikationsschnittstelle ohne besondere sicherheitstechnische Vorkehrungen sein. Die Sicherheit der Kommunikation kann durch das Zusammenspiel der lokalen Sicherheitsinstanz 38 des Automatisierungssystems 10 und der zweiten Sicherheitsinstanz 41 des externen Sicherheitsgeräts gewährleistet werden.

In einem bevorzugten Ausführungsbeispiel kommunizieren die sichere Laufzeitumgebung 22 und der SPM 40 in einem festen Zyklus mit Time-Out-Überwachung miteinander. Nach Aufforderung durch den SPM 40 werden an bestimmten Codestellen Daten (z.B. Timerwerte, Ablaufkontrolle, etc.) bewusst verfälscht. Hierfür weist die sichere Laufzeitumgebung 22 Manipulatoren auf, die durch den SPM 40 aktiviert werden können, beispielsweise indem der SPM 40 eine entsprechende ID der Manipulatoren an die sichere Laufzeitumgebung 22 sendet. Der SPM 40 erwartet im Anschluss eine passende Fehlermeldung von der sicheren Laufzeitumgebung 22. Mit anderen Worten der SPM 40 hat eine gewisse Erwartungshaltung gegenüber der sicheren Laufzeitumgebung 22, nachdem eine Manipulator-ID übermittelt worden ist.

Die sichere Laufzeitumgebung 22 darf aufgrund der Manipulatoren keinen für den Anwender erkennbaren Fehler aufweisen oder aufgrund der bewussten Verfälschung die Ausgänge abschalten. Deshalb muss der Fehler von der sicheren Laufzeitumgebung 22 abgefangen werden. Das Konzept ermöglicht es, das Systemverhalten an der realen Stelle im Programm zu testen.

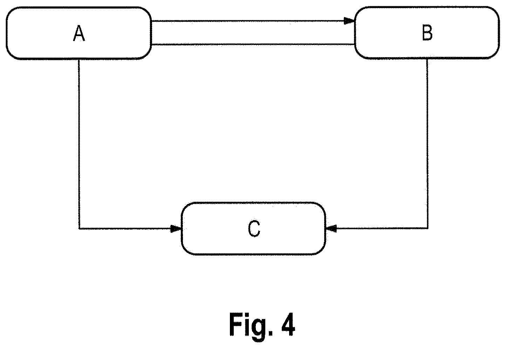

Fig. 4 zeigt in einem Zustandsdiagramm die möglichen Zustände, die SPM 40 und das Automatisierungssystem 10 während einer Überprüfung einnehmen können.

Im Normalzustand A wartet die sichere Laufzeitumgebung 22 auf einen Fehler, um entsprechend auf diesen reagieren zu können. Erhält die sichere Laufzeitumgebung 22 in diesem Zustand eine Manipulator-ID, vorzugsweise einschließlich einer definierten Bitmaske, vom SPM 40 wird der entsprechende Manipulator aktiviert. Die sichere Laufzeitumgebung 22 geht dann in den Zustand B über, in dem sie gegen den entsprechenden Fehler desensibilisiert ist. Anschließend folgt die Manipulation der zu verarbeitenden Daten, um einen Fehler zu simulieren. Vorzugsweise werden hierzu die Daten mit der empfangenen Bitmaske exklusiv verodert, so dass die fehlerhafte Bitstelle vom SPM 40 rolliert werden kann.

Die sichere Laufzeitumgebung 22 muss auf die Manipulation hin die passende Fehlermeldung erzeugen, auf die der SPM 40 wartet. Tritt die Erwartung nicht ein, kann die sichere Laufzeitumgebung 22 und/oder der SPM 40 ein sicheres Abschalten, beispielsweise durch einen zweiten Abschaltweg auslösen. Der zweite Abschaltweg kann in einem bevorzugten Ausführungsbeispiel durch das Zusammenwirken des SPM 40 und der sicheren Peripheriebaugruppe 20 realisiert werden. Es versteht sich jedoch, dass auch andere Abschaltwege denkbar sind.

Ist der Test erfolgreich abgeschlossen, geht die sichere Laufzeitumgebung 22 wieder in den Normalzustand A über. Sollte während der Desensibilisierung der Fehler real auftreten, wird dieser zwar durch die Desensibilisierung abgefangen, allerdings wäre der Test nicht erfolgreich, so dass eine nicht-abgefangene Fehlermeldung an dem SPM 40 übermittelt wird.

Mit den externen Tests durch die SPM 40 können alle in der lokalen Sicherheitsinstanz einkanalig ausgeführten Tests separat überprüft werden. Beispielsweise können durch die externen Tests folgende einkanalige Test überprüft werden: Eingangsdatenvergleiche, Ausgangsdatenvergleiche, RAM-Test, ROM-Test, Timertest, Zyklusüberwachung, Ablaufüberwachung der sicheren Laufzeitumgebung 22 sowie Ablaufüberwachung der Anwenderprogramme 24, 26.

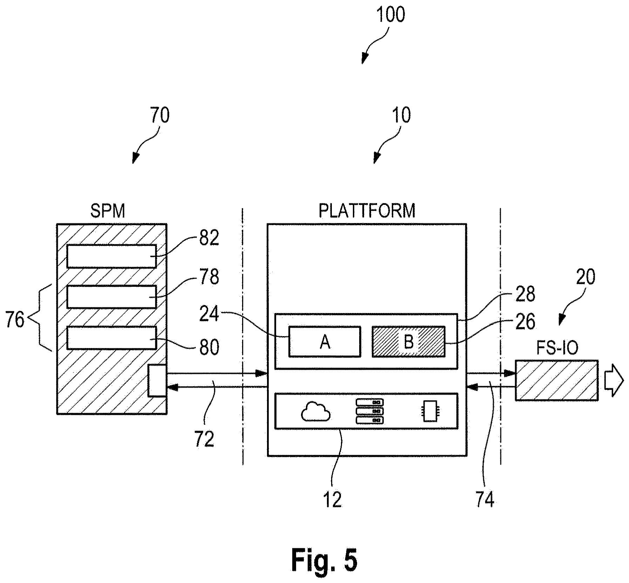

Fig. 5 zeigt eine schematische Darstellung eines Automatisierungssystems gemäß einer zweiten Ausführungsform der vorliegenden Erfindung.

Das Automatisierungssystem gemäß der zweiten Ausführungsform ist hier in seiner Gesamtheit mit der Bezugsziffer 100 bezeichnet. Teil mit gleicher Bezugsziffer bezeichnen gleiche Teil wie in der ersten Ausführungsform und werden im Folgenden nicht erneut erläutert.

Das Automatisierungssystem 100 setzt sich hier aus drei einzelnen Komponenten zusammen.

Die erste Komponente ist ein Automatisierungssystem 10, welches auf einer nichtsicheren Plattform 12 aufbaut. Insbesondere ist das Automatisierungssystem dazu eingerichtet, eine Sicherheitsfunktion 28 mit Hilfe von zwei Anwenderprogrammen 24, 26 zu realisieren. Die erste Komponente kann somit ein Automatisierungssystem umfassen, wie es in Bezug auf die erste Ausführungsform beschrieben worden ist. Es versteht sich jedoch, dass die erste Komponente nicht auf diese Ausgestaltung beschränkt ist, sondern jedes Automatisierungssystem als erste Komponente geeignet ist.

Die zweite und dritte Komponente bilden die Überwachungseinrichtung 70 und die fehlersichere Peripheriebaugruppe 20. Bei der Überwachungseinrichtung 70 kann es sich insbesondere um den zuvor beschriebenen SPM handeln, der vorstehend mit der Bezugsziffer 40 bezeichnet wurde.

Die Überwachungseinrichtung 70 und die fehlersichere Peripheriebaugruppe sind über eine erste Kommunikationsschnittstelle 72 und eine zweite Kommunikationsschnittstelle 74 mit dem Automatisierungssystem 10 gekoppelt. Neben einer Kommunikation mit dem Automatisierungssystem ermöglichen die erste Kommunikationsschnittstelle 72 und die zweite Kommunikationsschnittstelle 74 ebenso eine Kommunikation zwischen der Überwachungseinrichtung 70 und der fehlersicheren Peripheriebaugruppe 20. Mit anderen Worten kann die Überwachungseinrichtung 70 über die Plattform 12 mit der fehlersicheren Peripheriebaugruppe 20 kommunizieren. Die erste und die zweite Kommunikationsschnittstelle 72, 74 sind hier insbesondere einkanalige Kommunikationsschnittstellen, wie beispielsweise eine handelsübliche USB-Schnittstelle. Es versteht sich, dass auch andere Kommunikationsschnittstellen, wie bspw. Ethernet, RS232 etc., gleichermaßen in Betracht kommen können.

Die Überwachungseinrichtung 70 ist vorzugsweise, wie hier dargestellt, eine eigenständige Hardwarekomponente, die dazu eingerichtet ist, fehlersichere Dienste 76 bereitzustellen. Die fehlersicheren Dienste 76 können in Software oder in Hardware implementiert sein, wobei die Eigenfehlersicherheit durch entsprechende Maßnahmen gewährleistet wird, beispielsweise indem die Dienste mehrkanalig redundant ausgebildet sind oder aber auf einer mehrkanalig redundanten Hardware in an sich bekannter Weise ausgeführt werden, so dass ein fehlersicherer Betrieb der Dienste 76 gewährleistet und getestet werden kann. Es versteht sich, dass die fehlersichere Ausgestaltung nicht auf die hier dargestellte Form beschränkt ist, sondern auch andere dem Fachmann bekannte Maßnahmen zur Erlangung der Eigenfehlersicherheit denkbar sind.

Die fehlersicheren Dienste 76 sind vorzugsweise einfache Dienste, wie beispielsweise hier eine Zähler-Einheit 78 und eine Kodier-Einheit 80. Die fehlersicheren Dienste 76 können somit auf einer Hardware implementiert werden, die einfach und wenig komplex ist. Die Hardware der Überwachungseinrichtung 70 kann beispielsweise ein oder mehrere einfache Mikrocontroller, ASICs oder ähnliche Recheneinheiten umfassen, oder aber aus diskreten elektrischen Bauteilen zusammengesetzt sein. Insbesondere ist bei der Verwendung eines Mikrocontrollers dessen Befehlsumfang möglichst eingeschränkt, so dass eine Zertifizierung hinsichtlich der Eigenfehlersicherheit kostengünstig möglich ist. In einer bevorzugten Ausgestaltung beschränkt sich die Hardwareausstattung der Überwachungseinrichtung 70 darauf, die Zähler-Einheit 78 und Kodier-Einheit 80 ausführen zu können.

Die fehlersicheren Dienste 76 wirken mit der fehlersicheren Peripheriebaugruppe 20 zusammen, so dass unabhängig von der Implementierung der Sicherheitsfunktion 28 ein sicheres Abschalten auch im Fehlerfall der nichtsicheren Plattform 12 gewährleistet werden kann.

In einem bevorzugten Ausführungsbeispiel weist die Überwachungseinrichtung 70 hierzu selbst keine weiteren sicherheitsbezogenen Einrichtungen auf, d.h. insbesondere keine eigenen sicheren Ausgänge, die einen zusätzlichen Abschaltpfad für den sicherheitskritischen Prozess direkt bewirken können. Die Kopplung mit dem sicherheitskritischen Prozess erfolgt vorzugsweise ausschließlich über die fehlersichere Peripheriebaugruppe 20.

In einem besonders bevorzugten Ausführungsbeispiel weist die Überwachungseinrichtung 70 zusätzlich eine Testeinrichtung 82 in Form einer Sicherheitsinstanz auf, welche mit einer auf der Plattform 12 implementierten sicheren Laufzeitumgebung 22 zusammenwirkt, um zusätzliche Testeinrichtungen für die Anwenderprogramme 24, 26 bereitzustellen. Vorzugsweise ist die sichere Laufzeitumgebung 22, wie zuvor im Zusammenhang mit der ersten Ausführungsform beschrieben, Anwenderprogramm-unspezifisch implementiert und für verschiedene Automatisierungssysteme 10 identisch. So kann mit einer einheitlichen Testeinrichtung 82 die Sicherheit verschiedener Sicherheitsfunktionen 28 auf verschiedenen Plattformen 12 unabhängig getestet werden, wobei die Überwachungseinrichtung 70 selbst als ultima ratio zusammen mit der fehlersicheren Peripheriebaugruppe den Prozess in einen sicheren Zustand überführen kann. Die Überwachungseinrichtung 70 kann so an verschiedenen Automatisierungssystemen ohne zusätzliche Anpassungen verwendet werden. Ebenso lässt sich die Überwachungseinrichtung 70 ohne größeren Aufwand bei einem Defekt durch eine andere ersetzen.

Erfindungswesentlich ist gemäß der zweiten Ausführungsform somit die Aufteilung der sicheren Steuerung auf verschiedene, insbesondere Hardware-eigenständige Komponenten. Der Schwerpunkt der ersten Komponente ist dabei, möglichst viel Rechenkapazität für die Implementierung der Sicherheitsfunktion 28 bereitzustellen und eine einfache Entwicklung der zugehörigen Anwenderprogramme 24, 26 zu ermöglichen. Der Schwerpunkt der zweiten und dritten Komponente hingegen liegt darauf, die Hardware bei diesen so einfach wie möglich auszugestalten, so dass die Fehlersicherheit der zur Verfügung gestellten Dienste 76 zuverlässig und kostengünstig gewährleistet werden kann.

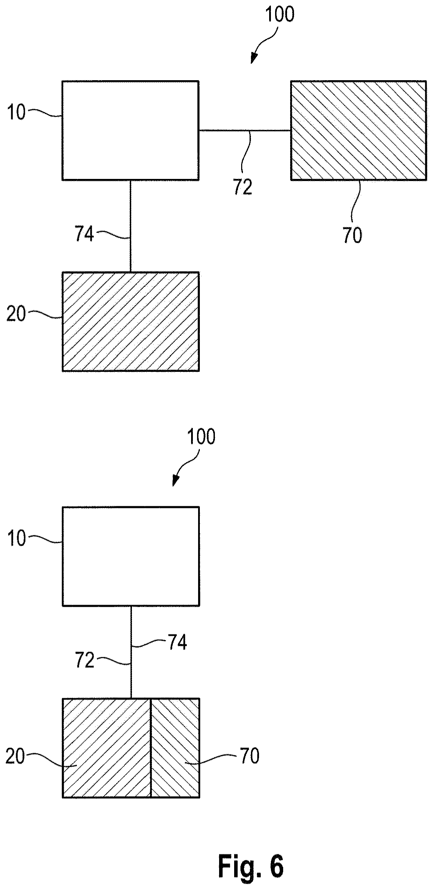

Fig. 6 zeigt zwei Ausführungsvarianten eines Automatisierungssystems gemäß der zweiten Ausführungsform der vorliegenden Erfindung.

In der ersten Variante (im Bild oben) sind die drei Komponenten des Automatisierungssystems 100 als eigenständige Hardwarekomponenten ausgebildet. Sowohl die Überwachungseinrichtung 70 als auch die fehlersichere Peripheriebaugruppe 20 sind je als eine Hardwarekomponente eingerichtet. Eine erste Kommunikationsschnittstelle 72 verbindet die Überwachungseinrichtung 70 mit dem Automatisierungssystem 10 und eine zweite Kommunikationsschnittstelle 74 verbindet die fehlersichere Peripheriebaugruppe 20 mit dem Automatisierungssystem 10. Eine Kommunikation zwischen der Überwachungseinrichtung 70 und der fehlersicheren Peripheriebaugruppe 20 findet somit vorzugsweise ausschließlich über das Automatisierungssystem 10 statt.

Die Ausgestaltung mit separaten Komponenten hat den Vorteil, dass diese getrennt gefertigt und vertrieben werden können. So kann eine Überwachungseinrichtung 70 beispielsweise für eine Vielzahl von unterschiedlichen Peripheriebaugruppen 20 verwendbar sein. Das Automatisierungssystem 100 kann so an die jeweilige Anforderung angepasst werden, wobei nur die Peripheriebaugruppe 20 auszutauschen ist.

Bei der zweiten Variante (im Bild unten) sind die Überwachungseinrichtung 70 und die fehlersichere Baugruppe 20 als eine gemeinsame Hardwarekomponente realisiert. Eine erste logische Kommunikationsschnittstelle 72 und eine zweite logische Kommunikationsschnittstelle 74 werden hier durch eine einzelne physikalische Verbindung zum Automatisierungssystem 10 implementiert. Trotz der gemeinsamen Integration auf einer Hardware erfolgt eine Kommunikation zwischen der Überwachungseinrichtung 70 und der fehlersicheren Peripheriebaugruppe 20 über die erste und die zweite Kommunikationsschnittstelle 72, 74, d.h. auch hier erfolgt die Kommunikation untereinander über das Automatisierungssystem 10. Mit anderen Worten sind die Überwachungseinrichtung 70 und die fehlersichere Peripheriebaugruppe 20 trotz der Integration zwei eigenständige logische Einheiten.

Vorteilhaft kann bei dieser Ausgestaltung für die Überwachungseinrichtung 70 und die fehlersichere Baugruppe 20 auf eine gemeinsame sichere Hardwarebasis zurückgegriffen werden. Beispielsweise können Funktionen der fehlersicheren Peripheriebaugruppe als auch der Überwachungseinrichtung 70 über gemeinsame Prozessoren realisiert werden, die mehrkanalig redundant arbeiten. Ebenso reicht in dieser Ausgestaltung eine physikalische Kommunikationsschnittstelle aus, um die erste und die zweite Kommunikationsschnittstelle zu realisieren. Auf diese Weise lässt sich besonders günstig ein sicheres Automatisierungssystem 100 im Sinne der vorliegenden Erfindung realisieren.

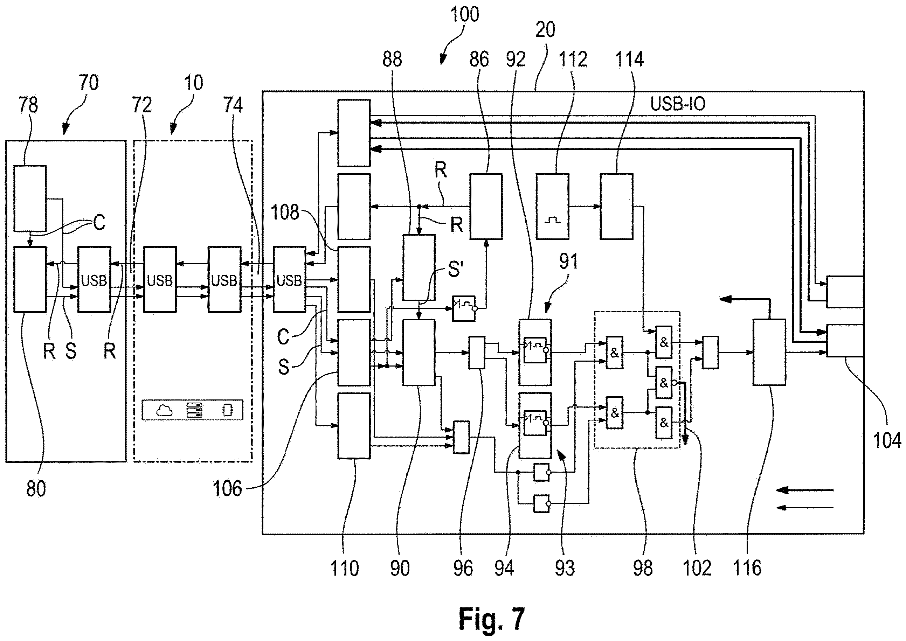

Fig. 7 zeigt ein Schaltungsdiagramm eines bevorzugten Ausführungsbeispiels des erfindungsgemäßen Automatisierungssystems gemäß der zweiten Ausführungsform.

Das Automatisierungssystem 100 umfasst hier eine Überwachungseinrichtung 70 ein Automatisierungssystem 10 sowie eine fehlersichere Peripheriebaugruppe 20 je als eigenständige Hardwarekomponente. Die Kommunikation zwischen den einzelnen Komponenten erfolgt in diesem Ausführungsbeispiel über eine USB-Schnittstelle. Das heißt, die erste Kommunikationsschnittstelle 72 und die zweite Kommunikationsschnittstelle 74 sind jeweils USB-Verbindungen.

Die Überwachungseinrichtung 70 weist ferner zur Realisierung des fehlersichern Dienstes 76 eine Zähler-Einheit 78 und eine Kodier-Einheit 80 auf. Die Zähler-Einheit 78 kann kontinuierlich einen internen Zähler inkrementiert und der Kodier-Einheit 80 einen Zählerwert C bereitstellen. Ferner kann der Zählerwert C über die Kommunikationsschnittstelle 72, 74 an die fehlersichere Peripheriebaugruppe 20 übertragen werden.

Die Kodier-Einheit 80 empfängt einen Zufallswert R von dem Automatisierungssystem 10. Der Zufallswert R wird hier von einem Zufallszahlengenerator 86 innerhalb der fehlersicheren Peripheriebaugruppe 20 erzeugt. Aus dem Zufallswert R und dem Zählerwert C generiert die Kodier-Einheit 80 einen Schlüsselwert S und überträgt diesen über das Automatisierungssystem 10 an die fehlersichere Peripheriebaugruppe 20.

Die Überwachungseinrichtung 70 prüft, ob der Zufallswert, der vorzugsweise zyklisch vom Automatisierungssystem 10 übertragen wird, sich über die Zeit ändert. Da der Schlüsselwert S sowohl auf dem Zufallswert R als auch dem fortlaufenden Zähler C beruht, kann sichergestellt werden, dass alle Zahlen mindestens einmal durchlaufen werden. Dies ermöglicht, dass die Überwachungseinrichtung 70 nicht sicherstellen muss, ob ein Zufallsgenerator, welcher den Zufallswert erzeugt, auch tatsächlich alle Werte durchläuft. Eine solche Auswertung wäre rechenintensiv und damit in einer bevorzugten Ausgestaltung der Überwachungseinrichtung 70 mit nur geringer Rechenkapazität schwierig durchführbar.

Die fehlersichere Peripheriebaugruppe 20 weist zu den in der Überwachungseinrichtung 70 vorgesehenen Einheiten komplementäre Einheiten auf. Diese können als dedizierte Einheiten ausgebildet sein oder aber in Form von Softwaremodulen realisiert sein.

Die fehlersichere Peripheriebaugruppe 20 umfasst hier als komplementäre Einheiten eine Dekodier-Einheit 88 und eine Vergleicher-Einheit 90. Die Dekodier-Einheit 88 empfängt den fortlaufenden Zählerwert C sowie eine Kopie des Zufallswerts R und erzeugt daraus einen Vergleichswert S'. Sind der empfangene Schlüsselwert S und der generierte Vergleichswert S' identisch, signalisiert die fehlersichere Peripheriebaugruppe 20 einen sicheren Zustand. In einer bevorzugten Ausgestaltung ist hierbei die Dekodierung nur der Dekodier-Einheit 88 der fehlersicheren Peripheriebaugruppe 20 bekannt und die Kodierung nur der Kodier-Einheit 78 der Überwachungseinrichtung.

Das Signalisieren des sicheren Zustands erfolgt in dem hier dargestellten bevorzugten Ausführungsbeispiel mit Hilfe eines ersten Ausgangsschaltkreises 91 mit einer ersten monostabilen Kippstufe 92 und eines zweiten Ausgangsschaltkreises 93 mit einer zweiten monostabilen Kippstufe 94. Der Vergleicher 90 wirkt abwechselnd über einen Umschalter 96 auf die beiden Ausgangsschaltkreise 91, 93, d.h. hier auf die Monoflops 92, 94. Die fehlersichere Peripheriebaugruppe 20 zeigt einen sicheren Zustand dann an, wenn mindestens eins der beiden Monoflops 92, 94 getriggert ist. Im normalen Betrieb, wenn der Vergleicher 90 kontinuierlich ein Signal liefert, d.h. ein Vergleich zwischen dem Schlüsselwert S und dem generierten Zwischenwert S' kontinuierlich erfolgreich ist, sind in der Regel beide Monoflops 92, 94 getriggert, d.h. die Zykluszeit, innerhalb derer neue Schlüssel gesendet werden, ist entsprechend auf die Haltedauer der Monoflops 92, 94 abgestimmt.

Für einen Test, ob die fehlersichere Peripheriebaugruppe 20 den sicheren Zustand zutreffend signalisiert, erzeugt die Überwachungseinrichtung 70 einen falschen Schlüsselwert, indem ein Bit des korrekten Schlüsselwerts S invertiert wird. Dies hat zur Folge, dass der Vergleicher 90 eine Ungleichheit zwischen dem Schlüsselwert S und dem generierten Zwischenwert S' feststellt und das Signal zum Umschalter 96 unterbricht.

Infolgedessen fällt zunächst einer der beiden Monoflops ab und liefert am Ausgang kein Signal mehr. Dies kann durch die logische Verknüpfungsschaltung 98 im Anschluss an die Monoflops erfasst werden, woraufhin ein Time-out-Signal 102 erzeugt wird. Das Time-out-Signal 102 kann von der Überwachungseinrichtung 70 zurückgelesen werden, so dass diese feststellen kann, ob ein falscher Zahlenwert als Schlüsselwert S zu einem erwarteten Abfall eines der beiden Monoflops führt.

Da während des Tests zunächst nur ein Monoflop abfällt, signalisiert die fehlersichere Peripheriebaugruppe weiterhin einen sicheren Zustand, sofern zeitnah durch einen korrekten Schlüsselwert S das abgefallene Monoflop nachgetriggert wird. Erfolgt keine rechtzeitige Nachtriggerung, fällt auch das zweite Monoflop ab und die fehlersichere Peripheriebaugruppe 20 signalisiert einen nichtsicheren Zustand. Im vorliegenden Ausführungsbeispiel würde das Signalisieren eines nichtsicheren Zustands dazu führen, dass die sicheren Ausgänge 104 abgeschaltet werden. Es versteht sich, dass die Ausgestaltung mit Monoflops 92, 94 nur eine mögliche Ausgestaltung der Ausgangsschaltkreise 91, 93 darstellt. Die beiden Zweige können auch anders gestaltet sein und müssen lediglich aktivierbar und de-aktivierbar sein. Vorzugweise sind die Ausgangsschaltkreise eingerichtet, sich selbst nach einer definierten Zeitspanne ab der Aktivierung zu deaktivieren. Alternativ ist aber auch eine Deaktivierung von extern denkbar.

Neben den Einrichtungen, die das hier dargestellte Watchdog-Prinzip realisieren, kann die fehlersichere Peripheriebaugruppe 20 über zusätzliche Testeinrichtungen verfügen, die mit der Watchdog-Absicherung kombiniert werden können. Beispielsweise können neben einem ersten Eingangsregister zwei weitere Eingangsregister 108, 110 vorgesehen sein, welche einen vorherigen und einen nachfolgenden Wert umfassen, anhand derer Adressverfälschungen erkennbar sind. Ferner kann die fehlersichere Peripheriebaugruppe 20 einen sicheren Taktgeber 112 aufweisen, der einen sicheren Takt bereitstellt, der für verschiedene sicherheitsgerichteten Anwendungen einsetzbar ist. Eine solche Anwendung kann beispielsweise eine Spannungsüberwachungseinrichtung 114 sein, welche eine sichere Spannungsversorgung überwacht und ggf. auf die sicheren Ausgänge 104 der fehlersicheren Peripheriebaugruppe 20 einwirken kann. Denkbar ist auch die Implementierung einer Wiederanlaufsperre 116, die in einem Fehlerfall verhindert, dass der sicherheitskritische Prozess von sich aus neu startet.

Es versteht sich, dass die hier dargestellte Implementierung nur ein Beispiel ist, wie ein Automatisierungssystem 100 im erfindungsgemäßen Sinne aufgebaut sein kann. Es versteht sich, dass andere Ausgestaltungen ebenfalls von dem erfindungsgemäßen Gegenstand erfasst sein können. Grundsätzlich ist der Schutzbereich der vorliegenden Anmeldung durch die Ansprüche gegeben und nicht durch die in der Beschreibung oder den Figuren gezeigten Merkmale beschränkt.

## Patentansprüche

1. Automatisierungssystem (10) zur Überwachung eines sicherheitskritischen Prozesses, umfassend:
- eine Plattform (12) zum Ausführen von Anwenderprogrammen (24, 26), und
- ein erstes Anwenderprogramm (24) und ein zum ersten Anwenderprogramm diversitäres zweites Anwenderprogramm (26), die zusammen eine Sicherheitsfunktion (28) realisieren,
**gekennzeichnet durch**
- eine fehlersichere Peripheriebaugruppe (20), über welche der sicherheitskritische Prozess mit den Anwenderprogrammen (24, 26) koppelbar ist, sowie
- eine sichere Laufzeitumgebung (22), welche unabhängig von den Anwenderprogrammen (24, 26) auf der Plattform implementiert ist, und dazu eingerichtet ist, den Anwenderprogrammen (24, 26) von der Plattform (12) unabhängige sichere Ressourcen (30) bereitzustellen.

2. Automatisierungssystem nach Anspruch 1, wobei die Plattform (12) eine nicht sichere Plattform ist.

3. Automatisierungssystem nach einem der Ansprüche 1 oder 2, wobei das zweite Anwenderprogramm (26) zum ersten Anwenderprogramm (24) inverse Daten verarbeitet.

4. Automatisierungssystem nach einem der Ansprüche 1 bis 3, wobei die sichere Laufzeitumgebung (22) die sicheren Ressourcen (30) redundant und diversitär für das erste und zweite Anwenderprogramm (24, 26) bereitstellt.

5. Automatisierungssystem nach einem der Ansprüche 1 bis 4, wobei die sichere Laufzeitumgebung (22) dazu ausgebildet ist, Kreuzvergleiche zwischen dem ersten und dem zweiten Anwenderprogramm (24, 26) anwenderprogrammunabhängig auszuführen.

6. Automatisierungssystem nach einem der Ansprüche 1 bis 5, wobei die sichere Laufzeitumgebung (22) dazu ausgebildet ist, Zeitgeber als sichere Ressource (30) bereitzustellen und Tests zur Überprüfung der Zeitgeber auszuführen.

7. Automatisierungssystem nach einem der Ansprüche 1 bis 6, wobei die sichere Laufzeitumgebung (22) mit einem externen Sicherheitsgeber (40) koppelbar ist.

8. Automatisierungssystem nach einem der Ansprüche 1 bis 7, wobei die sichere Laufzeitumgebung (22) dazu ausgebildet ist, Manipulatoren auszuführen, die eingerichtet sind, die Ausführung des ersten oder des zweiten Anwenderprogramms (24, 26) und/oder der sicheren Ressourcen (30) zu manipulieren.

9. Automatisierungssystem nach Anspruch 8, wobei die Manipulatoren von einem externen Sicherheitsgeber (40) auslösbar sind.

10. Automatisierungssystem nach einem der Ansprüche 1 bis 9, wobei die sichere Laufzeitumgebung eine Hardware-spezifische Komponente und eine Hardware-unabhängige Komponente aufweist.

11. Automatisierungssystem nach Anspruch 10, wobei ausschließlich die Hardware-unabhängige Komponente mit einem externen Sicherheitsgeber (40) koppelbar ist.

12. Verfahren zur Überwachung eines sicherheitskritischen Prozesses, mit den Schritten:
- Bereitstellen einer Plattform (12) zum Ausführen von Anwenderprogrammen (24, 26);
- Realisieren einer Sicherheitsfunktion (28) durch ein erstes Anwenderprogramm (24) und ein zum ersten Anwenderprogramm diversitäres zweites Anwenderprogramm (26);
**gekennzeichnet durch**
- Koppeln der Anwenderprogramme (24, 26) mit dem sicherheitskritischen Prozess über eine fehlersichere Peripheriebaugruppe (20);
- Bereitstellen sicherer Ressourcen (30), die von der Plattform (12) unabhängig sind und durch eine sichere Laufzeitumgebung (22) bereitgestellt werden, welche unabhängig von den Anwenderprogrammen (24, 26) auf der Plattform (12) implementiert ist; und
- Ausführen des ersten und des zweiten Anwenderprogramms auf der Plattform (12) unter Nutzung der sicheren Ressourcen (30).

## Claims

1. An automation system (10) for monitoring a safety critical process, comprising:
- a platform (12) for executing user programs (24, 26); and
- a first user program (24) and a second user program (26), which together implement a safety function (28), the second user program (26) being diversitary with respect to the first user program;
**characterized by**
- a fail-safe peripheral module (20), via which the safety-critical process can be coupled to the user programs (24, 26); and
- a safe runtime environment (22) implemented on the platform independently of the user programs (24, 26) and configured to provide the user programs (24, 26) with safe resources (30) independent of the platform (12).

2. The automation system according to claim 1, wherein the platform (12) is a nonsafe platform.

3. The automation system according to any one of claims 1 or 2, wherein the second user program (26) processes data inverse to the first user program (24).

4. The automation system of any one of claims 1 to 3, wherein the safe runtime environment (22) provides the safe resources (30) redundantly and diversitarily to the first user program (24) and the second user program (26).

5. The automation system of any one of claims 1 to 4, wherein the safe runtime environment (22) is configured to perform cross comparisons independently of the user programs between the first user program (24) and the second user programs (26).

6. The automation system of any one of claims 1 to 5, wherein the safe runtime environment (22) is configured to provide timers as a safe resource (30) and to execute tests to verify the timers.

7. The automation system according to any one of claims 1 to 6, wherein the safe runtime environment (22) is couplable to an external safety device (40).

8. The automation system according to any one of claims 1 to 7, wherein the safe runtime environment (22) is configured to execute manipulators, which are configured to manipulate the execution of the first user program (24), the second user program (26) and/or the safe resources (30).

9. The automation system according to claim 8, wherein the manipulators are triggerable by an external safety device (40).

10. The automation system according to any one of claims 1 to 9, wherein the safe runtime environment comprises a hardware-specific component and a hardwarenonspecific component.

11. The automation system according to claim 10, wherein only the hardwarenonspecific component is couplable to an external safety device (40).

12. A method for monitoring a safety critical process, comprising the steps of:
- providing a platform (12) for executing user programs (24, 26);
- implementing a safety function (28) by a first user program (24) and a second user program (26), the second user program (26) being diversitary to the first user program;
**characterized by**
- coupling the user programs (24, 26) with the safety-critical process via a fail-safe peripheral module (20);
- providing safe resources (30) that are independent of the platform (12) and are provided by a safe runtime environment (22) that is implemented independently of the user programs (24, 26) on the platform (12); and
- executing the first user program (24) and the second user program (26) on the platform (12) using the safe resources (30).

## Revendications

1. Système d'automatisation (10) destiné à la surveillance d'un processus critique en termes de sécurité, ledit système comprenant :
- une plate-forme (12) destinée à exécuter des programmes d'application (24, 26),
et
- un premier programme d'application (24) et un deuxième programme d'application (26), différent du premier programme d'application, lesquels réalisent conjointement une fonction de sécurité (28),
**caractérisé par**
- un module périphérique anti-erreurs (20) qui permet de coupler le processus critique en termes de sécurité aux programmes d'application (24, 26), et
- un environnement à temps d'exécution sécurisé (22) qui est mis en oeuvre indépendamment des programmes d'application (24, 26) sur la plate-forme et qui est conçu pour fournir aux programmes d'application (24, 26) des ressources sécurisées (30) indépendantes de la plate-forme (12).

2. Système d'automatisation selon la revendication 1, la plate-forme (12) étant une plate-forme non sécurisée.

3. Système d'automatisation selon l'une des revendications 1 ou 2, le deuxième programme d'application (26) traitant des données inverses par rapport au premier programme d'application (24).

4. Système d'automatisation selon l'une des revendications 1 à 3, l'environnement à temps d'exécution sécurisé (22) fournissant les ressources sécurisées (30) de manière redondante et diversifiée pour les premier et deuxième programmes d'application (24, 26).

5. Système d'automatisation selon l'une des revendications 1 à 4, l'environnement à temps d'exécution sécurisé (22) étant conçu pour effectuer des comparaisons croisées entre les premier et deuxième programmes d'application (24, 26) indépendamment du programme d'application.

6. Système d'automatisation selon l'une des revendications 1 à 5, l'environnement à temps d'exécution sécurisé (22) étant conçu pour fournir des temporisateurs comme ressource sécurisée (30) et pour exécuter des tests afin de vérifier les temporisateurs.

7. Système d'automatisation selon l'une des revendications 1 à 6, l'environnement à temps d'exécution sécurisé (22) pouvant être couplé à un transmetteur de sécurité externe (40).

8. Système d'automatisation selon l'une des revendications 1 à 7, l'environnement à temps d'exécution sécurisé (22) étant conçu pour exécuter des manipulateurs qui sont conçus pour manipuler l'exécution du premier ou deuxième programme d'application (24, 26) et/ou les ressources sécurisées (30).

9. Système d'automatisation selon la revendication 8, les manipulateurs pouvant être déclenchés par un transmetteur de sécurité externe (40).

10. Système d'automatisation selon l'une des revendications 1 à 9, l'environnement à temps d'exécution sécurisé comportant un composant spécifique au matériel et un composant indépendant du matériel.

11. Système d'automatisation selon la revendication 10, seul le composant indépendant du matériel pouvant être couplé à un transmetteur de sécurité externe (40).

12. Procédé de surveillance d'un processus critique en termes de sécurité, ledit procédé comprenant les étapes suivantes :
- fournir une plate-forme (12) destinée à exécuter des programmes d'application (24, 26) ;
- réaliser une fonction de sécurité (28) par le biais d'un premier programme d'application (24) et d'un deuxième programme d'application (26), différent du premier programme d'application ;
**caractérisé par** les étapes suivantes
- coupler les programmes d'application (24, 26) au processus critique en termes de sécurité par le biais d'un ensemble périphérique anti-erreur (20) ;
- fournir des ressources sécurisées (30) qui sont indépendantes de la plate-forme (12) et qui sont fournies par un environnement à temps d'exécution sécurisé (22) qui est mis en oeuvre sur la plate-forme (12) indépendamment des programmes d'application (24, 26) ; et
- exécuter les premier et deuxième programmes d'application sur la plate-forme (12) à l'aide des ressources sécurisées (30).
